Europäisches Patentamt

European Patent Office

Office européen des brevets

(19)

(11) **EP 0 606 913 B1**

(12) **EUROPEAN PATENT SPECIFICATION**

(45) Date of publication and mention
of the grant of the patent:
**24.03.1999   Bulletin 1999/12**

(51) Int Cl.⁶: **G10L 5/06**, G10L 7/08,
G10L 9/06, G10L 9/16,
G10L 9/18

(21) Application number: **94100445.9**

(22) Date of filing: **13.01.1994**

(54) **Method and system for recognizing pattern**

Verfahren und Vorrichtung zur Mustererkennung

Méthode et système pour reconnaître un échantillon

(84) Designated Contracting States:
**DE FR GB**

(30) Priority: **13.01.1993   JP 3647/93**

(43) Date of publication of application:
**20.07.1994   Bulletin 1994/29**

(73) Proprietor: **NEC CORPORATION**
**Tokyo (JP)**

(72) Inventor: **Iso, Ken-Ichi**
**Minato-ku, Tokyo (JP)**

(74) Representative: **Betten & Resch**
**Reichenbachstrasse 19**
**80469 München (DE)**

(56) References cited:
**EP-A- 0 397 136**          **EP-A- 0 510 632**
**EP-A- 0 523 347**

**Description**

BACKGROUND OF THE INVENTION

Field of the Invention

The present invention relates to a method and a system for automatically recognizing a pattern expressed in time sequence of a feature vector, such as a voice signal.

Description of the Related Art

Various technologies have been developed in pattern recognition system for recognizing a time sequence pattern. Amongst, one of the best established and frequently used methods is "Hidden Markov Models (HMM)". Principle of the HMM will be discussed hereinafter.

Assuming a word name is designated by a number w, the object for recognition can be a word set which can be expressed by:

$$\{w \mid w = 1, 2, ..... W\} \tag{1}$$

The reference pattern of each word can be expressed by a sequence of states. The nth state of the word w has a vector output probability distribution of

$$\text{Multi - Dimensional Gauss distribution } b_n^w(x)$$

which is determined by:

$$\text{Set of Average Vector } \mu_n^w \text{ and covariant matrix } \Sigma_n^w, \ (\mu_n^w, \Sigma_n^w) \tag{2}$$

$$b_n^w(x) = \frac{1}{\sqrt{2\pi^F |\Sigma_n^w|}} \exp\left[-(x-\mu_n^w)^\dagger (\Sigma_n^w)^{-1} (x-\mu_n^w)\right] \tag{3}$$

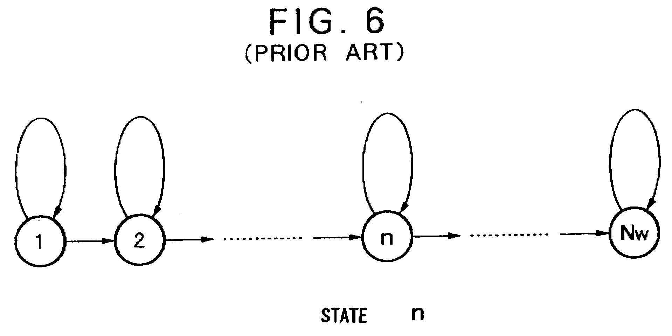

P is a dimension of vector x and
Average Vector $\mu_n^w$
and
$(\Sigma_n^w)^{-1}$ is inverse matrix of covariant matrix of P rows and P columns
superscript $\dagger$ represents transposition. To transition at respective state, transition probabilities are associated. An example (in case that number of states is $N_w$) of a reference pattern of a word is shown in Fig. 6. In Fig. 6, nth state has a (Transition probability $a_{n,n}^w$) to itself and to adjacent n+1th state
(Transition probability $= a_{n,n+1}^w$)
A word output probability $P(a_1, ... a_r, |w)$ of the reference pattern of the word w to output the feature vectors sequence $a_1, .... a_r$ is defined by the following equation:

$$P(a_1, ..., a_T | w) = \sum_{n_1} ... \sum_{n_T} P(a_1, ..., a_T | n_1, ..., n_{T_1}, w) \ P(n_1, ..., n_T | w)$$

$$..... (4)$$

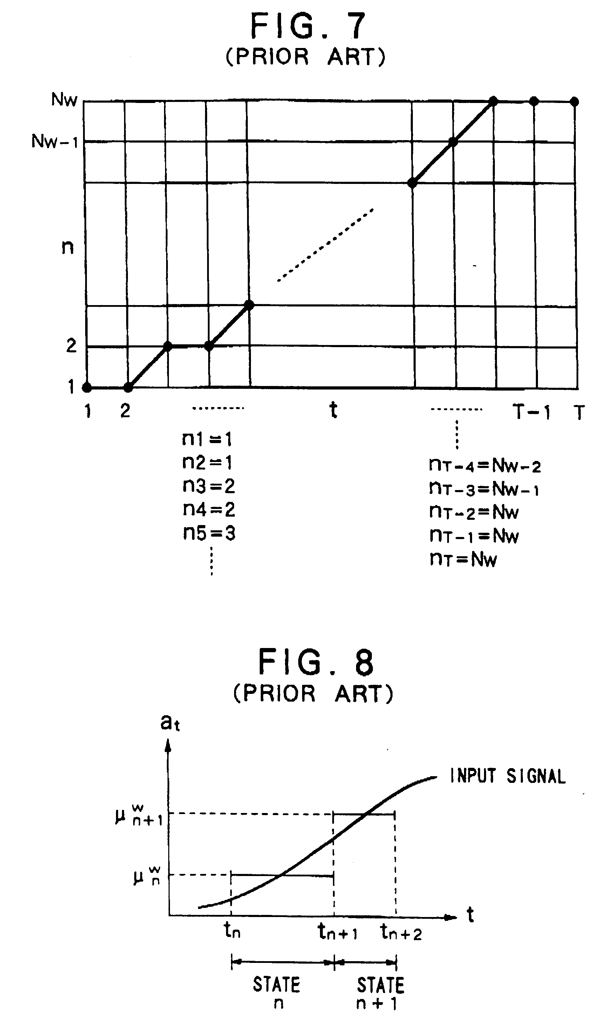

Here, $n_1, .... n_r$ represents the transition of state which stays at $n_1$ at a time t = 1, and reaches at $n_T$ at a time t = T. In the foregoing equations, sums represents sums of all possible state transition. The state transition may be discussed on treris shown in Fig. 7. In Fig. 7, the horizontal axis corresponds to the feature vector and the vertical axis corresponds to the state sequence (see Fig. 6) of the reference pattern of the word. The state transition is designated on the path (thick line) on the treris. $n_1, ..., n_T$ express this by way of equation. $P(a_1, ...., a_T | n_1, ..., n_r, w)$ in the equation (4) is a probability when the state transition is established, and $P(n_1, ..., n_r|w)$ is a probability of occurrence of the state transition. These probabilities are calculated from a vector output probability distribution and a transition probability as follow:

$$P(a_1, ...., a_T | n_1, ..., n_T, w) = \prod_{t=1}^{T} b_{nt}^{w}(a_t) \quad .....(5)$$

$$P(n_1, ..., n_T | w) = \prod_{t=1}^{T} a_{nt,nt+1}^{w} \quad ...(6)$$

The effective method of calculation of the word output probability $P(a_1, ..., a_T|w)$ given by the equation (4) has been known as "forward calculation method". The "forward calculation method" has e.g. been discussed as "forward algorithm" in a publication "Speech Recognition by Probability Model", page 42, algorithm 3.2. As a result, an accumulated probability $\alpha_t^w(n)$ to stay at the state n at a time t is initialized according to the following equation:

$$\alpha_1^w(n) = \begin{cases} b_1^w(a_1) & \text{if } n = 1 \\ 0 & \text{otherwise} \end{cases} \quad ....(7)$$

By performing calculation sequentially from a time 2 to time T according to the following equation:

$$\alpha_t^w(n) = \sum_{m=1}^{N} \alpha_{t-1}^w(m) \, a_{m.n}^w \, b_n^w(a_t) \quad .....(8)$$

the word output probability $P(a_1, ..., a_r|w)$ can be obtained as

$$P(a_1, ...., a_T|w) = \alpha_T^w(N_w) \quad (9)$$

Also, Viterbi calculation method, in which a sum of possible all state transition is approximated in the extent for the state transition providing the maximum probability, has been discussed in e.g. the above-identified publication on page 46, algorithm 3.4. In the "Viterbi calculation method" the following equation is employed in place of the foregoing equation (4):

$$P(a_1, ..., a_T|w) = \max_{a_1} ... \max_{a_r} P(a_1, ..., a_T | n_1, ..., n_T, w) \, P(n_1, ..., n_T|w) ...(10)$$

In this case, by modifying the calculation for deriving the maximum value of the sum in the equation (8) in the forward calculation method, others are the same.

$$\alpha_t^w(n) = \max_{m=1,...,N} \alpha_{t-1}^w(m) \, a_{m.n}^w \, b_n^w(a_t) \quad .....(11)$$

By employing the "forward calculation method" or "Viterbi calculation method", a word output probability for outputting the feature vector sequence of the input signal can be calculated based upon the known reference pattern of the objective word for recognition. Then, recognition can be performed by selecting the word name having the maximum word output probability among all as the result of recognition.

In the HMM method set forth above, the reference pattern of the word is expressed as the state sequence having multi-dimensional gaussian distribution. Namely, assuming that the reference pattern of the word w is the state sequence of $N_w$ of states, the input is divided into $N_w$ sections so that each section is modeled by one gaussian distribution. Manner of this is illustrated in Fig. 8. In Fig. 8, the horizontal axis represents a time of the input signal and the vertical axis represents a value $a_t$ of the feature vector. Here, the dimension of the feature vector is illustrated by taking as single dimension. $\mu_n^w$ is an average vector of the gaussian distribution of the state n. $\mu_{n+1}^w$ represents the average vector of the gaussian distribution. In Fig. 8, extracting such a state transition which stays at the state n from a time $t_n$ to time $t_{n+1}$ and at the state n+1 from the time $t_{n+1}$ to $t_{n+2}$, manner of matching of the reference pattern and the input signal is illustrated. As can be clear from Fig. 8, HMM approximates the input signal in the sections corresponding to respective states by the average value and the distribution therearound. For instance, the smoothly varying portion of the input signal from the time $t_n$ to $t_{n+1}$ is approximated by a constant average value $\mu_n^w$. In order to establish a model for dynamically varying signals such as the voice signal, on the basis of the flat pattern system (average vector) in section, huge amounts of sections (states) are required. However, increasing of number of states results in increasing of number of parameters (average vectors of respective states and covariance matrix). Furthermore, in order to estimate the parameters at reliably high precision, huge amount of training data becomes necessary.

SUMMARY OF THE INVENTION

It is an object of the invention to provide a method and system for recognizing a pattern, which improves the defect in the HMM method to require huge amount of parameters of models in order to establish model with high precision in modeling of signal in flat pattern system in sections, and thus permits high precision modeling with lesser number of parameters to realize low cost and high performance pattern recognition system.

In order to accomplish the above-mentioned object, a pattern recognition method, according to one aspect of the invention, comprises the steps of:

　　providing a set of control signal vector and covariance matrix having respective states of a reference pattern of an objective word for recognition, which reference pattern is expressed by a plurality of states and transitions between the states, and transition probabilities between respective states;

　　deriving a prediction vector of t th feature vector on the basis of the t-1 th feature vector and the control signal vector; deriving a feature vector output probability for outputting the t th feature vector in n th state of the reference pattern of the objective word for recognition from multi-dimensional gaussian distribution determined by the prediction vector and the covariant matrix with taking the prediction vector as an average vector;

　　deriving a word output probability for the reference pattern of the objective word for recognition, outputting the feature vector sequence of the input signal employing the feature vector output probability and transition probabilities contained in respective states od f the reference pattern; and

　　outputting one of the word output probabilities having the maximum probability as a result of recognition of the word among all of the word output probabilities derived with respect to the objective word for recognition.

Preferably, the length of the reference pattern of the length $N_w$ of objective word for recognition is the sequence of $N_w$ of words, when the n th state of the reference pattern has the control signal vector $c_n^w$, the prediction vector $\hat{a}_t^w$ (n) is derived as $\hat{a}_t^w = f(a_{t-1}, c_t^w)$ from the function $f(\cdot)$ from P+Q dimension to P dimension assuming the dimension of the feature vector is P and the dimension of the control signal vector is Q, employing the t-1 th feature vector $a_{t-1}$.

According to another aspect of the invention, a pattern recognition system comprises:

　　reference pattern storage means for storing a set of control signal vector and covariant matrix having respective states of a reference pattern of an objective word for recognition, which reference pattern is expressed by a plurality of states and transitions between the states, and transition probabilities between respective states;

　　prediction vector deriving means for deriving a prediction vector of t th feature vector on the basis of the t-1 th feature vector and the control signal vector;

　　feature vector output probability deriving means for deriving a feature vector output probability for outputting the t th feature vector in n th state of the reference pattern of the objective word for recognition from multi-dimensional gaussian distribution determined by the prediction vector and the covariant matrix with taking the prediction vector as an average vector;

　　word output probability deriving means for deriving a word output probability for the reference pattern of the objective word for recognition, outputting the feature vector sequence of the input signal employing the feature vector output probability and transition probabilities contained in respective states of the reference pattern; and

　　recognition result outputting means for outputting one of the word output probabilities having the maximum probability as a result of recognition of the word among all of the word output probabilities derived with respect to the objective word for recognition.

The pattern recognition system may further comprise features extracting means for transforming the input signal into a feature vector sequence; and

feature vector storage means for storing the feature vector. The predicted vector deriving means may perform such operation that, when the length of the reference pattern of the length $N_w$ of objective word for recognition is the sequence of $N_w$ of words, and when the n th state of the reference pattern has the control signal vector $c_n^w$, the prediction vector $\hat{a}_t^w(n)$ is derived as $\hat{a}_t^w = f(a_{t-1}, c_t^w)$ from the function $f(\cdot)$ from P+Q dimension to P dimension assuming the dimension of the feature vector is P and the dimension of the control signal vector is Q, employing the t-1 th feature vector $a_{t-1}$.

BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but, are for explanation and understanding only.

In the drawings:

Fig. 1 is an explanatory illustration showing a principle of pattern recognition method according to the present invention;

Fig. 2 is an explanatory illustration showing a principle of pattern recognition method according to the present invention;

Fig. 3 is an explanatory illustration showing a principle of pattern recognition method according to the present invention;

Fig. 4 is a block diagram showing one embodiment of a pattern recognition system according to the present invention;

Fig. 5 is a flowchart showing a process of the pattern recognition system of Fig. 4;

Fig. 6 is an illustration showing an example of a reference pattern of state transition of a word;

Fig. 7 is an illustration of a trellis for explaining the reference pattern of state transition of the word; and

Fig. 8 is an illustration showing a manner for establishing a model by a gaussian distribution for $N_w$ sections in the case where the reference pattern of the word contains a sequence of $N_w$ of states.

DESCRIPTION OF THE PREFERRED EMBODIMENT

The preferred embodiment of a method and a system for recognizing a pattern according to the present invention will be discussed in detail with reference to the accompanying drawings.

The feature of the pattern recognition method according to the present invention is that an average vector of a multi-dimensional gaussian distribution at each state of the reference pattern in the above-mentioned HMM method is not taken as a constant, a predicted vector which is calculated by a predictor on the basis of a feature vector of an input signal at one preceding period is employed so that the dynamically varying input signal, such as a voice signal can be expressed effectively with smaller amount of parameters.

In case of the HMM method, the length of the reference pattern of length $N_w$ of the word w is a sequence of $N_w$ of states. The nth state contains a multi-dimensional gaussian distribution $b_n^w(X)$ determined by:

a combination of an average vector $\mu_n^w$

and covariant matrix $\Sigma_n^w$, $(\mu_n^w, \Sigma_n^w)$ (12)

as vector output probability distribution.

$$b_n^w(x) = \frac{1}{\sqrt{2\pi^P |\Sigma_n^w|}} \exp[-(x-\mu_n^w)^\dagger (\Sigma_n^w)^{-1}(x-\mu_n^w)]$$ (13)

In case of the present invention, the length of the reference pattern of length $N_w$ of the word w is a sequence of $N_w$ of states. The nth state contains a combination of a control signal vector $c_n^w$ and covariant matrix $\Sigma_n^w$, $(c_n^w, \Sigma_n^w)$ The vector output probability that the nth state outputs the t th feature vector of the input signal can be calculated from the following multi-dimensional gaussian distribution.

$$b_n^w(a_t) = \frac{1}{\sqrt{2\pi^F |\Sigma_n^w|}} \exp[-(a_t - \hat{a}_c^w(n))^\dagger (\Sigma_n^w)^{-1} (a_t - \hat{a}_t^w(n))] \tag{14}$$

Employing this vector output probability distribution, the word output probability is calculated from the foregoing equation (4).

Here, what is different from the conventional HMM method is that the average vector of the gaussian distribution is not $\mu_n^w$ as constant but is a prediction vector $\hat{a}_t^w(n)$. The prediction vector is calculated by a predictor $f(\cdot)$ using the control vector $c_n^w$ having the nth state and the t-1 th feature vector $a_{t-1}$ of the input signal.

$$\hat{a}_t^w(n) = f(a_{t-1}, c_n^w) \tag{15}$$

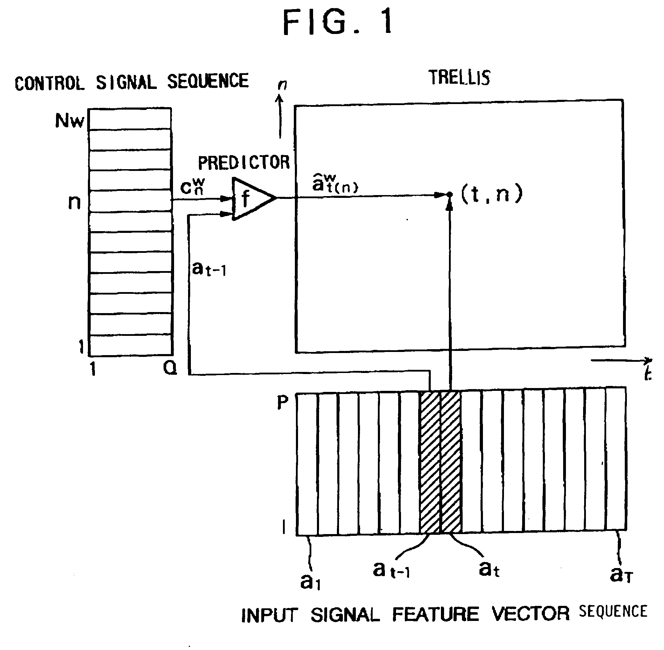

Here, the function f is a function from $P \div Q$ dimension to P dimension assuming that the dimension of the feature vector is P dimension and the dimension of the control vector is Q dimension. The function $f(\cdot)$ can be regarded as a predictor predicting the feature vector at a time t from the feature vector at a time t-1. Manner of prediction will be discussed with reference to Fig. 1. Fig. 1 diagrammatically illustrates matching of the feature vector sequence $a_1$, .... $a_t$, ... $a_r$ of the input signal of the length T and $N_w$ length of the reference pattern, which corresponds to the trellis (Fig. 7) of the HMM method. Here, at the grid point (t, n) on the trellis designated by the time t of the input signal and the state n of the reference pattern, the prediction vector $\hat{a}_t^w(n)$ is calculated as the average vector of the multi-dimensional gaussian distribution employing the predictor $f(\cdot)$ in order to calculate the vector output probability $b_n^w(a_t)$. As can be seen from the drawing, the control signal vector $c_n^w$ having the nth state and the feature vector $a_{t-1}$ of the input signal at one preceding period are employed for calculation of the prediction vector.

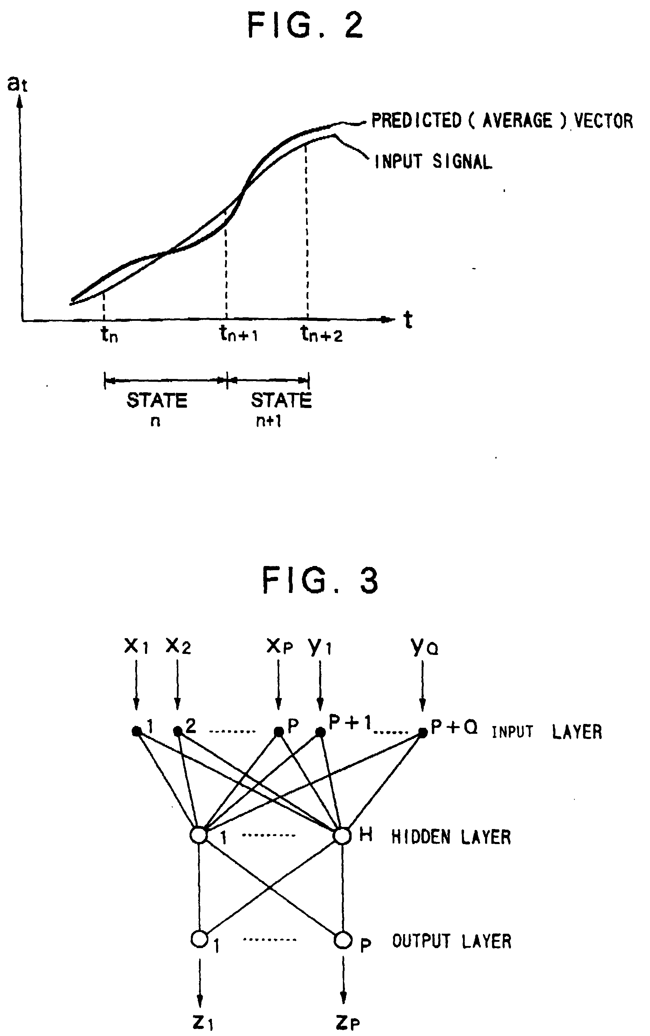

As set forth, according to the present invention, the average vector $\mu_n^w$ of the gaussian distribution of the nth state is replaced with the prediction vector $\hat{a}_t^w(n)$ depending upon the input signal from time to time. Therefore, the problem caused in expressing the dynamic variation of the input signal with the average vector as pointed out in the HMM method, can be solved, and thus the reference pattern matching with the input voice with high precision can be provided by employing the average vector which varies dynamically following to the input signal. The manner of this is illustrated in Fig. 2 for comparison with that in Fig. 8. As can be also clear from comparison of these figures, the present invention is superior over the prior art regarding the precision of the parameters.

Next, further discussion will be given for the predictor $f(\cdot)$ employed in the present invention. The predictor taking x and z as vectors in the P dimension and y as a vector in the Q dimension, is expressed by:

$$z = f(x, y) \tag{16}$$

Various functions may be considered as functions from the P+Q dimension to P dimension.

As a linear function, a matrix can be employed.

$$Z_i = \sum_{j=1}^{P} F_{ij} x_j + \sum_{j=1}^{Q} G_{ij} y_j + H_i \qquad \ldots \ldots (17)$$

Here, $z_i$, $x_i$ and $y_i$ represent components of the vector/ The predictor is expressed by a matrix $F_{ij}$ of P rows and P columns, a matrix $G_{ij}$ of P rows and Q columns, and a vector $H_1$ in the P dimension. Number of parameters in the predictor is $P(P + Q + 1)$

As a non-linear function, a hierarchical neural network having P + Q of input units and P of output units. The hierarchical neural network has been discussed in detail in Hideki Aso, "Neural Network Information Processing", Sangyo Tosho. The construction in the case where 3 layer network having H of hidden units is employed, is shown in Fig. 3. The parameter of the predictor is $(P + Q)H$ of coupling coefficients from the input layer to the hidden layer, H of threshold values of the hidden layer, HP of coupling coefficients from the hidden layer to the output layer, and P of threshold values of the output layer.

The predictor employed in the present invention is realized as the function set forth above. The same predictor is applicable for all states of reference patterns of all possible objective words for recognition. In each state of reference pattern of each objective word for recognition, different prediction (average) vectors $\hat{a}_t^w$ are output from the same feature vector $a_{t-1}$ depending upon the word or state because the predictor is using mutually different control signals.

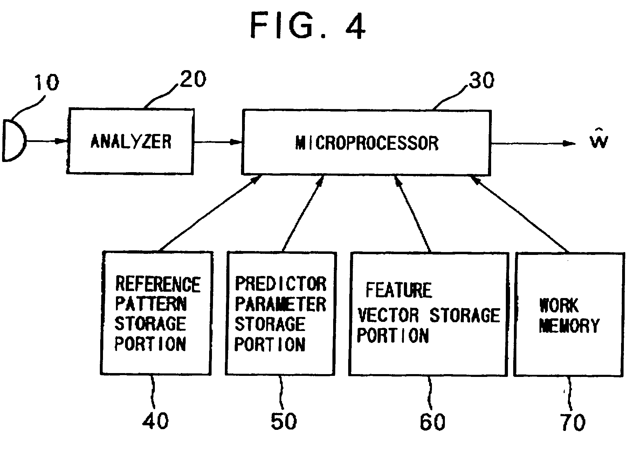

Fig. 4 shows one embodiment of the pattern recognition system for which the pattern recognition method of the present invention is applied. A voice signal input from a microphone 10 is sampled and modeled by an analyzing portion 20 and fed to a microprocessor 30 with transformation into the feature vector $a_t$ by a fast Fourier transformation or so forth. To the microprocessor 30, a reference pattern storage portion 40, a predictor parameter storage portion 50, a feature vector storage portion 60 and a work memory 70 are connected as memories.

In the reference pattern storage portion 40, a sequence (n=1, .... $N_w$) of the control signal vector $c_n^w$ and covariant matrix $\Sigma_n^w$ and a transition probability $a_{m,n}^w$ (m, n = 1, ...., $N_w$) are stored as parameters of the reference pattern of each word w. In the predictor parameter storage portion 50 stores parameters of the predictor (when the linear predictor is employed as the predictor, the parameters are $F_{ij}$, $G_i$, $H_i$). The feature vector storage portion 60 maintains the feature vector $a_{t-1}$ of the one preceding period. The work memory is a work area for temporarily storing the vector output probability and the accumulated probability upon calculation of the word output probability according to the reference pattern of each objective word for recognition. These reference pattern storage portion 40, the predictor pattern storage portion 50, the feature vector storage portion 60 and the work memory 70 may be defined in a separated memory area in a main memory of the microprocessor.

The recognition process is executed by a program by the microprocessor 30. For the leading feature vector $a_1$ of the input signal, the following initialization is performed for each state of each objective words (w = 1, ..., W, ... n = 1, ..., $N_w$, in which $N_w$ is the number of states of the reference pattern of the work w).

$$\alpha_1^w(n) = \begin{cases} b_1^w(a_1) & \text{if } n = 1 \\ 0 & \text{otherwise} \end{cases}$$

This corresponds to the initial state of the equation (7) of the forward calculation method (or Viterbi calculation method. Also, the feature vector $a_t$ is stored in the feature storage portion 60.

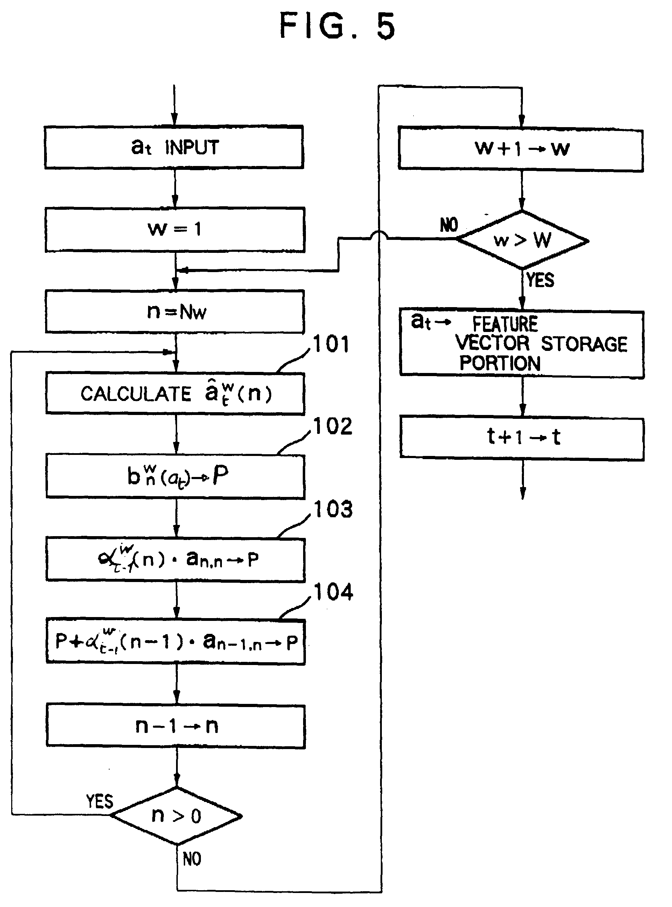

Subsequently, at every occurrence of input of the feature vector of the input signal, the process shown in the flowchart of Fig. 5 is executed by the microprocessor 30. In the drawings, 101 is block for calculating the predicted vector by the equation (15) from the feature vector $a_{t-1}$ of one preceding period and the control signal vector $c_n^w$ stored in the reference pattern storage portion 40. With taking the predicted vector as the average vector, the vector output probability $b_n^w(a_t)$ is calculated according to the equation (14)in the block 102, and then stored as a variable b on the work memory. In the block of 103, the accumulated probability $a^w(n)$ on the block 103 and is multiplied by the transition probability $a_n^w$ read out from the reference pattern storage portion and then stored in the work memory 70 as a variable P. In the block of 104, the accumulated probability $\alpha_{t-1}^w(n - 1)$ read out from the work memory is multiplied by the transition probability read out from the reference pattern storage portion. The process from the block 103 to the block 104 corresponds to the process according to the equation (8).

Once the above-mentioned processes are completed, the time of the input signal is incremented for one period. Then, the same process is performed in response to another feature vector $a_t$. After termination of the input signal and the final feature vector $a_T$ is processed, the microprocessor 30 internally performs the following processed. The accumulated probability $a^w(N_w)$ of each word stored in the work memory 70 provides the word output probability of the reference pattern of each word outputting the input signal. By comparing these sequentially, the maximum value is derived to output w = $\hat{w}$ corresponding thereto as the result of recognition.

As set forth above, by modifying the prediction vector by the predictor from time to time depending upon the input signal instead of using the average vector of the gaussian distribution of the HMM method, the low cost and high performance pattern recognition system can be realized by establishing models of the signals at high accuracy with lesser number of states and lesser number of parameters.

Although the invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments which can be embodied within the scope encompassed by the claims.

**Claims**

1. A pattern recognition method comprising the steps of:

providing a set of control signal vector and covariant matrix having respective states of a reference pattern of an objective word for recognition, which reference pattern is expressed by a plurality of states and transitions between the states, and transition probabilities between respective states;

deriving a prediction vector of t th feature vector on the basis of the t-1 th feature vector and the control signal vector;

deriving a feature vector output probability for outputting the t th feature vector in n th state of the reference pattern of the objective word for recognition from multi-dimensional gaussian distribution determined by said prediction vector and said covariant matrix with taking said prediction vector as an average vector;

deriving a word output probability for the reference pattern of the objective word for recognition, outputting the feature vector sequence of the input signal employing the feature vector output probability and transition probabilities contained in respective states of said reference pattern; and

outputting one of the word output probabilities having the maximum probability as a result of recognition of the word among all of the word output probabilities derived with respect to the objective word for recognition.

2. A pattern recognition method as set forth in claim 1, wherein the length of the reference pattern of the length $N_w$ of objective word for recognition is the sequence of $N_w$ of words, when the n th state of said reference pattern has the control signal vector $c_n^w$, the prediction vector $\hat{a}_t^w(n)$ is derived as $\hat{a}_t^w = f(a_{t-1}, c_t^w)$ from the function $f(\cdot)$ from P+Q dimension to P dimension assuming the dimension of the feature vector is P and the dimension of the control signal vector is Q, employing the t-1 th feature vector $a_{t-1}$.

3. A pattern recognition system comprising:

reference pattern storage means (40) for storing a set of control signal vector and covariant matrix having respective states of a reference pattern of an objective word for recognition, which reference pattern is expressed by a plurality of states and transitions between the states, and transition probabilities between respective states;

prediction vector deriving means for deriving a prediction vector of t th feature vector on the basis of the t-1 th feature vector and the control signal vector;

feature vector output probability deriving means for deriving a feature vector output probability for outputting the t th feature vector in n th state of the reference pattern of the objective word for recognition from multi-dimensional gaussian distribution determined by said prediction vector and said covariant matrix with taking said prediction vector as an average vector;

word output probability deriving means for deriving a word output probability for the reference pattern of the objective word for recognition, outputting the feature vector sequence of the input signal employing the feature vector output probability and transition probabilities contained in respective states of said reference pattern; and

recognition result outputting means for outputting one of the word output probabilities having the maximum probability as a result of recognition of the word among all of the word output probabilities derived with respect to the objective word for recognition.

4. A pattern recognition system as set forth in claim 3, which further comprises features extracting means for transforming the input signal into a feature vector sequence; and

feature vector storage means (60) for storing said feature vector.

5. A pattern recognition method as set forth in claim 1, wherein said prediction vector deriving performs such operation that, when the length of the reference pattern of the length $N_w$ of objective word for recognition is the sequence of $N_w$ of words, and when the n th state of said reference pattern has the control signal vector $c_n^w$, the prediction vector $\hat{a}_t^w(n)$ is derived as $\hat{a}_t^w = f(a_{t-1}, c_t^w)$ from the function $f(\cdot)$ from P+Q dimension to P dimension assuming the dimension of the feature vector is P and the dimension of the control signal vector is Q, employing the t-1 th feature vector $a_{t-1}$.

**Patentansprüche**

1. Mustererkennungsverfahren, das die folgenden Schritte aufweist:

Vorsehen einer Menge aus einem Steuersignalvektor und einer kovarianten Matrix, die jeweilige Zustände eines Referenzmusters eines zu erkennenden Zielwortes enthalten, wobei das Referenzmuster durch mehrere zustände und Übergänge zwischen den Zuständen sowie durch Übergangswahrscheinlichkeiten zwischen jeweiligen Zuständen gegeben ist;

Ableiten eines Vorhersagevektors eines t-ten Merkmalvektors anhand des (t-1)-ten Merkmalvektors und des Steuersignalvektors;

Ableiten einer Merkmalvektor-Ausgabewahrscheinlichkeit für die Ausgabe des t-ten Merkmalvektors im n-ten Zustand des Referenzmusters des zu erkennenden zielwortes aus einer mehrdimensionalen Gaußschen Verteilung, die durch den Vorhersagevektor und die kovariante Matrix unter Verwendung des Vorhersagevektors als Durchschnittsvektor bestimmt ist,

Ableiten einer Wort-Ausgabewahrscheinlichkeit für das Referenzmuster des zu erkennenden Zielwortes, Ausgeben der Merkmalvektor-Folge des Eingangssignals unter Verwendung der Merkmalvektor-Ausgabewahrscheinlichkeit und der in den jeweiligen Zuständen des Referenzmusters enthaltenen Übergangswahrscheinlichkeiten; und

Ausgeben einer der Wort-Ausgabewahrscheinlichkeiten mit der maximalen Wahrscheinlichkeit als Ergebnis der Erkennung des Wortes unter sämtlichen Wort-Ausgabewahrscheinlichkeiten, die für das zu erkennende Zielwort abgeleitet wurden.

2. Mustererkennungsverfahren nach Anspruch 1, bei dem die Länge des Referenzmusters mit der Länge $N_w$ des zu erkennenden Zielwortes die Folge aus $N_w$ Wörtern ist und der Vorhersagevektor $\hat{a}_t^w(n)$ dann, wenn der n-te Zustand des Referenzmusters den Steuersignalvektor $c_n^w$ enthält, aus der Funktion $f(\cdot)$ von der Dimension P+Q in die Dimension P abgeleitet wird als $\hat{a}_t^w = f(a_{t-1}, c_n^w)$, und zwar unter der Annahme, daß die Dimension des Merkmalvektors P ist und daß die Dimension des Steuersignalvektors Q ist sowie unter Verwendung des (t-1)-ten Merkmalvektors $a_{t-1}$.

3. Mustererkennungssystem, mit:

einer Referenzmuster-Speichereinrichtung (40) zum Speichern einer Menge aus einem Steuersignalvektor und einer kovarianten Matrix, die jeweilige Zustände eines Referenzmusters eines Zielwortes für die Erkennung enthalten, wobei das Referenzmuster durch mehrere Zustände und Übergänge zwischen den Zuständen sowie durch Übergangswahrscheinlichkeiten zwischen jeweiligen Zuständen gegeben ist;

eine Vorhersagevektor-Ableitungseinrichtung zum Ableiten eines Vorhersagevektors des t-ten Merkmalvektors anhand des (t-1)-ten Merkmalvektors und des Steuersignalvektors;

einer Merkmalvektor-Ausgabewahrscheinlichkeit-Ableitungseinrichtung zum Ableiten einer Merkmalvektor-Ausgabewahrscheinlichkeit für die Ausgabe des t-ten Merkmalvektors im n-ten Zustand des Referenzmusters des zu erkennenden Zielwortes aus einer mehrdimensionalen Gaußschen Verteilung, die durch den Vorhersagevektor und die kovariante Matrix unter Verwendung des Vorhersagevektors als Durchschnittsvektor bestimmt ist;

einer Wort-Ausgabewahrscheinlichkeit-Ableitungseinrichtung zum Ableiten einer Wort-Ausgabewahrscheinlichkeit für das Referenzmuster des zu erkennenden zielwortes, wobei die Merkmalvektor-Folge des Eingangssignals unter Verwendung der Merkmalvektor-Ausgabewahrscheinlichkeit und der in den jeweiligen Zuständen des Referenzmusters enthaltenen Übergangswahrscheinlichkeiten ausgegeben wird; und

einer Erkennungsergebnis-Ausgabeeinrichtung zum Ausgeben einer der Wort-Ausgabewahrscheinlichkeiten mit der maximalen Wahrscheinlichkeit als Ergebnis der Erkennung des Wortes unter allen Wort-Ausgabewahrscheinlichkeiten, die für das zu erkennende Zielwort abgeleitet wurden.

4. Mustererkennungssystem nach Anspruch 3, das ferner eine Merkmal-Extraktionseinrichtung zum Umwandeln des Eingangssignals in eine Merkmalvektor-Folge; und

eine Merkmalvektor-Speichereinrichtung (60) zum Speichern des Merkmalvektors aufweist.

5. Mustererkennungsverfahren nach Anspruch 1, bei dem die Ableitung des Vorhersagevektors eine Operation ausführt, gemäß der dann, wenn die Länge des Referenzmusters der Länge $N_w$ des zu erkennenden Zielwortes die Folge von $N_w$ Wörtern ist und wenn der n-te Zustand des Referenzmusters den Steuersignalvektor $c_n^w$ enthält, der Vorhersagevektor $\hat{a}_t^w(n)$ aus der Funktion $f(\cdot)$ von der Dimension P+Q in die Dimension P als $\hat{a}_t^w = f(a_{t-1}, c_n^w)$ abgeleitet wird, und zwar unter der Annahme, daß die Dimension des Merkmalvektors P ist und daß die Dimension des Steuersignalvektors Q ist sowie unter Verwendung des (t-1)-ten Merkmalvektors $a_{t-1}$.

**Revendications**

1. Procédé de reconnaissance de formes comprenant les étapes :

   de fourniture d'un ensemble de vecteurs de signaux de commande et d'une matrice de covariance ayant des états respectifs d'une forme de référence d'un mot cible pour la reconnaissance, laquelle forme de référence est exprimée par une pluralité d'états et de transitions entre les états, et des probabilités de transition entre les états respectifs ;
   de détermination d'un vecteur de prédiction du $t^{ème}$ vecteur de caractéristique sur la base du $t-1^{ème}$ vecteur de caractéristique et du vecteur de signaux de commande ;
   de détermination d'une probabilité de sortie de vecteur de caractéristique pour fournir en sortie le $t^{ème}$ vecteur de caractéristique dans le $n^{ème}$ état de la forme de référence du mot cible pour la reconnaissance à partir d'une distribution gaussienne multidimensionnelle déterminée par ledit vecteur de prédiction et ladite matrice de covariance en utilisant ledit vecteur de prédiction en tant que vecteur moyen ;
   de détermination d'une probabilité de sortie de mot pour la forme de référence du mot cible pour la reconnaissance, en fournissant en sortie la séquence de vecteurs de caractéristique du signal d'entrée en utilisant la probabilité de sortie de vecteurs de caractéristique et les probabilités de transition contenues dans des états respectifs de ladite forme de référence ; et
   de fourniture en sortie de l'une des probabilités de sortie de mots allant la probabilité maximale en tant que résultat de reconnaissance du mot parmi toutes les probabilités de sortie de mots déterminées en référence au mot cible pour la reconnaissance.

2. Procédé de reconnaissance de formes selon la revendication 1, dans lequel la longueur de la forme de référence de longueur $N_w$ du mot cible pour la reconnaissance est la séquence de $N_w$ mots, lorsque le $n^{ème}$ état de ladite forme de référence a un vecteur de signaux de commande $c_n^w$, le vecteur de prédiction $\hat{a}_n^w$ (n est déterminé comme étant $\hat{a}_n^w = f(a_{t-1}, c_n^w)$ à partir de la fonction f(.) passant de la dimension P+Q à la dimension P en supposant que la dimension du vecteur de caractéristique est P et que la dimension du vecteur de signaux de commande est Q, en utilisant le $t-1^{ème}$ vecteur de caractéristique $a_{t-1}$.

3. Système de reconnaissance de formes comprenant :

   des moyens (40) de stockage de forme de référence pour stocker un ensemble de vecteurs de signaux de commande et de matrices de covariance ayant des états respectifs d'une forme de référence d'un mot cible pour la reconnaissance, laquelle forme de référence est exprimée par une pluralité d'états et de transitions entre les états, et des probabilités de transition entre des états respectifs ;
   des moyens de détermination de vecteurs de prédiction pour déterminer un vecteur de prédiction du $t^{ème}$ vecteur de caractéristique sur la base du $t-1^{ème}$ vecteur de caractéristique et du vecteur de signaux de commande ;
   des moyens de détermination de la probabilité de sortie du vecteur de caractéristique pour déterminer une probabilité de sortie de vecteur de caractéristique afin de fournir en sortie le $t^{ème}$ vecteur de caractéristique dans le $n^{ème}$ état de la forme de référence du mot cible pour la reconnaissance à partir d'une distribution gaussienne multidimensiennelle déterminée par ledit vecteur de prédiction et ladite matrice de covariance en utilisant ledit vecteur de prédiction en tant que vecteur moyen ;
   des moyens de détermination de la probabilité de sortie de mots pour déterminer une probabilité de sortie de mots pour la forme de référence du mot cible pour la reconnaissance, en fournissant en sortie la séquence de vecteurs de caractéristique du signal d'entrée en utilisant la probabilité de sortie de vecteur de caractéristique et des probabilités de transition contenues dans des états respectifs de ladite forme de référence ; et
   des moyens de fourniture en sortie du résultat de la reconnaissance pour fournir en sortie l'une des probabilités de sorite de mots ayant la probabilité maximale comme résultat de la reconnaissance du mot parmi toutes les probabilités de sortie de mots déterminées par rapport au mot cible pour la reconnaissance.

4. Système de reconnaissance de formes selon la revendication 3, comprenant en outre des moyens extracteurs de caractéristique pour transformer le signal d'entrée en une séquence de vecteurs de caractéristique ; et

   des moyens (60) de stockage de vecteur de caractéristique pour stocker ledit vecteur de caractéristique.

5. Procédé de reconnaissance de formes selon la revendication 1, dans lequel lesdits moyens de détermination de vecteur de prédiction effectuent une opération telle que lorsque la longueur de la forme de référence de longueur

$N_w$ du mot cible pour la reconnaissance est une séquence de $N_w$ mots, et lorsque le $n^{ème}$ état de ladite forme de référence a le vecteur de signaux de commande $c_n^w$, le vecteur de prédiction $â_n^w(n)$ est déterminé comme étant $â_n^w = f(a_{t-1}, c_n^w)$ à parnir de la fonction $f(.)$ passant de la dimension $P+Q$ à la dimension $P$ en supposant que la dimension du vecteur de carractéristique est $P$ et que la dimension du vecteur de signaux de commande est $Q$, en utilisant le $t-1^{ème}$ vecteur de caractéristique $a_{t-1}$.

FIG. 1

CONTROL SIGNAL SEQUENCE

TRELLIS

PREDICTOR

INPUT SIGNAL FEATURE VECTOR SEQUENCE

# FIG. 2

# FIG. 3

# FIG. 4

# FIG. 5

| $a_t$ INPUT |
| --- |

| $w = 1$ |
| --- |

| $n = Nw$ |
| --- |

101

| CALCULATE $\hat{a}_t^w(n)$ |
| --- |

102

| $b_n^w(a_t) \to P$ |
| --- |

103

| $\alpha_{t-1}^w(n) \cdot a_{n,n} \to P$ |
| --- |

104

| $P + \alpha_{t-1}^w(n-1) \cdot a_{n-1,n} \to P$ |
| --- |

| $n - 1 \to n$ |
| --- |

YES ← $n > 0$

NO

| $w + 1 \to w$ |
| --- |

NO ← $w > W$

YES

| $a_t \to$ FEATURE VECTOR STORAGE PORTION |
| --- |

| $t + 1 \to t$ |
| --- |

15

FIG. 6
(PRIOR ART)

STATE n

# FIG. 7
## (PRIOR ART)

$n1 = 1$
$n2 = 1$
$n3 = 2$
$n4 = 2$
$n5 = 3$

$n_{T-4} = N_W-2$
$n_{T-3} = N_W-1$
$n_{T-2} = N_W$
$n_{T-1} = N_W$
$n_T = N_W$

# FIG. 8
## (PRIOR ART)

INPUT SIGNAL

STATE
n

STATE
n + 1